# EUROPEAN PATENT SPECIFICATION

(11) **EP 0 544 404 B1**
(45) Date of publication and mention of the grant of the patent: **15.01.1997**
(21) Application number: 92309718.2
(22) Date of filing: 23.10.1992
(51) Int. Cl.: H02K 5/22, H02K 5/14

(54) **A miniature motor with an installed earth terminal**
Kleinmotor mit einer installierten Erdklemme
Moteur miniature avec une borne de terre installée

(30) Priority: 25.10.1991 JP 279652/91
(43) Date of publication of application: 02.06.1993
(73) Proprietor: MABUCHI MOTOR KABUSHIKI KAISHA, Matsudo-shi, Chiba-ken (JP)
(72) Inventor: Mabuchi, Kazuichi, Mabuchi Motor K.K., Matsudo-shi, Chiba-ken (JP); Nishida, Yutaka, Mabuchi Motor K.K., Matsudo-shi, Chiba-ken (JP)
(74) Representative: Hitchcock, Esmond Antony

(56) References cited:
- EP-A- 0 218 484
- DE-U- 8 812 072
- GB-A- 2 173 648

## Description

This invention relates to miniature motors, and particularly to such motors in which one of the motor brushes is electrically connected to the motor case.

A typical known miniature motor construction includes a permanent magnet formed into an arc-segment shape fitted in a case made of a metallic material, such as mild steel and formed into a hollow cylinder, closed at one end. A rotor with an armature and a commutator is rotatably mounted in bearings in the case and a cover which closes the open end of the case. The cover is made of an insulating material, and has brushes mounted therein. The motor is driven in known manner from an external source through terminals connected to the brushes. In such miniature motors used for automotive electrical components for example, one of the brush terminals is connected to 'earth' via the motor case. However, the known techniques for accomplishing this are either unreliable or costly in terms of manufacturing complexity.

A motor configuration in which a connection is formed between the motor casing and a motor terminal is disclosed in European Specification No. 0,218,484. A recess is formed in the circumferential surface of the end cap of the motor to expose a motor terminal. A longitudinally extending portion of the motor casing is plastically deformed to extend into the recess and to engage the terminal, forming an electrical connection therewith. Another known arrangement which provides an electrical connection between a motor case and a brush terminal is set out in British Specification No. 2,173,648 and is discussed below.

The present invention seeks to provide a simple, economic and efficient means of securing an installed earth terminal in a miniature electric motor which is reliable, and does not involve substantial additional labour in the manufacture of the motor. Such a motor has an electrically conductive motor case with a permanent magnet mounted therein; an electrically non-conductive case cover engaging the case; a rotor mounted for rotation within the case; and brushgear on the case cover for conducting electric power to the rotor from an external power source, one of the brushes being electrically connected to the motor case by a U-shaped earth terminal, of which one leg engages a connector for a motor brush and the other leg engages the motor case between the case and the cover. According to the invention, a deforming part of the other leg of the earth terminal is plastically deformed into a groove formed in the cover to secure the electrical connection to the case, and a section of the motor case is bent over the deforming part.

This arrangement assists in securing the connection between the earth terminal and the case both directly and indirectly by the consequent deflection of the respective earth terminal leg. This can, depending upon the contours of the groove formed in the case cover, cause deformation of the earth terminal leg in two senses within the groove. The bending of the motor case section will also normally constitute plastic deformation thereof.

Some embodiments of the invention will now be described by way of example and with reference to the accompanying drawings wherein:
Figure 1 is an exploded cross-section view at a circumferential section of a motor case cover illustrating the connection between a motor case and a brush terminal in a prior art motor;
Figure 2 is an unexploded view similar to Figure 1 illustrating an embodiment of the present invention;
Figure 3 is a cross-sectional view of the embodiment of Figure 2 before the case cover is finally engaged with the motor case;
Figure 4 is a front view of the earth terminal shown in Figures 2 and 3;
Figure 5 is a longitudinal sectional view of the terminal of Figure 4;
Figure 6 is an exploded perspective view of a case cover to be fitted to a motor case;
Figure 7 is an elevation illustrating an embodiment of this invention;
Figure 8 is a partly broken, cross-sectional view of a miniature motor in accordance with another embodiment of this invention; and
Figure 9 is a sectional view taken on the line A-A in Figure 8 with portions of the motor case omitted.

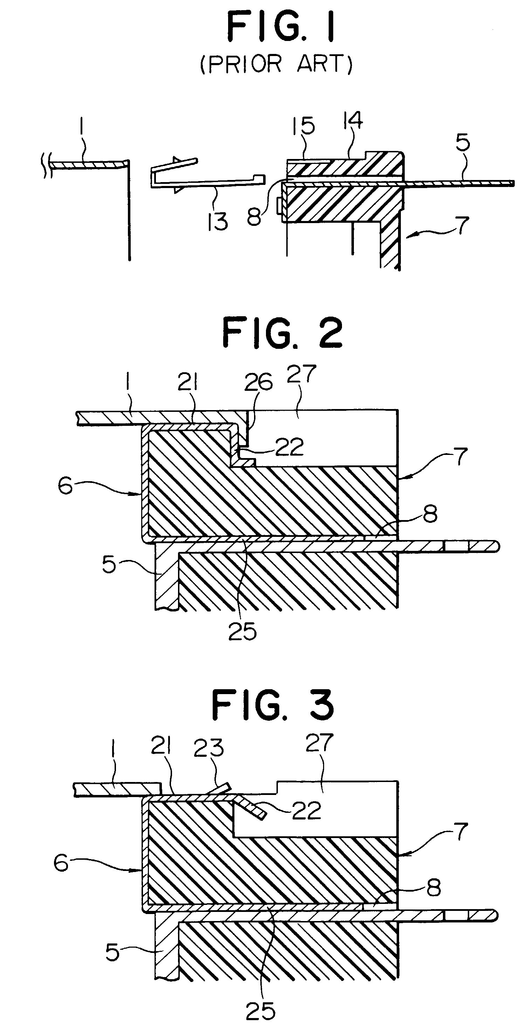

The conventional method of grounding miniature-motor body is as follows referring to Figure 1. An arrangement of this type is also described in British Specification No. 2,173,648. A terminal piece 5 protrudes from the inside to the outside through a hole 8 in the case cover 7 as shown in Figure 1. The terminal piece 5 is secured in the hole 8 by inserting one leg of a split pin 13 made of an electrically conductive material and formed into an essentially U shape into the hole 8 from the inside of the case cover 7. When the peripheral surface of the case cover 7 is engaged with the motor case 1, the other leg of the split pin 13 is forced onto the inside wall of the motor case 1, causing the brush terminal piece 5 and the motor case 1 to be electrically connected. A stepped section 14, 15 accommodates the other leg of the split pin 13 and limits the inward movement of the cover 7 into the case 1.

Another conventional method is as follows. A leg of the split pin 13 is spot-welded in advance to the motor case 1, and another leg of the split pin 13 is inserted into the hole 8 to fixedly fit and electrically connect to the respective motor brush.

The construction in the former example, in which a leg of the split pin 13 is held by the motor case 1 and the case cover 7, is unstable in terms of electrical contact. The construction in the latter example, in which a leg of the split pin 13 is spot-welded to the motor case 1 can ensure stable electrical contact, but results in substantially increased cost due to the spot-welding process involved. In addition, the spot welder has to be maintained at all times.

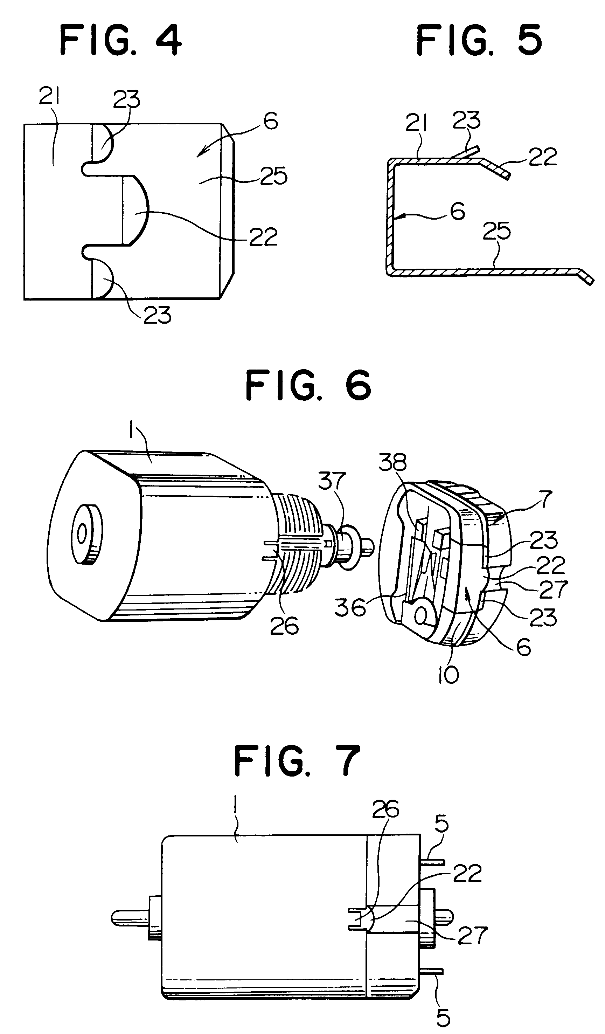

In the embodiment of the invention shown in Figures 2 to 7, engaging surfaces 10 are provided on the motor case 1 made of an electrically conductive material and the case cover 7 made of an electrically non-conductive material. An earth terminal 6 of an essentially U-shape, and as shown in Figures 4 and 5, is installed on the engaging surfaces 10, as shown in Figure 3. The earth terminal 6 has a case contacting leg 21 making contact with the motor case 1, and an electrically conductive part contacting leg 25 making contact with the brush terminal piece 5. The leg 21 has a deforming part 22 bent towards the leg 25 and two case contacting springs 23 bent towards the opposite side of the leg 25. A projection 26 is formed in the wall of the motor case 1, and a groove 27 is formed in the case cover 7.

The earth terminal 6 is installed on the case cover 7, as shown in Figure 3. The brush terminal piece 5 is disposed in a hole 8 provided on the case cover 7, for example, and the leg 25 of the earth terminal 6 is inserted into the hole 8 and fixedly fitted thereto while keeping contact with the brush terminal piece 5. The brushgear 36 is fixedly fitted inside the case cover 7.

As the motor case 1 receives the engaging surface 10 of the case cover 7, the inside surface of the open end of the motor case 1 is forced onto the case contacting springs 23 and engaged with the case cover 7. Next, a projection 26 provided on the motor case 1 is plastically deformed, together with the tip of the case contacting leg 21; that is, the deforming part 22, and securely fitted into the groove 27 provided on the case cover 7, as shown in Figure 2.

The earth terminal 6 is securely fitted to the case cover 7, and a sufficient contact pressure between the earth terminal 6 and the motor case 1 can be maintained, thereby ensuring stable electrical contact.

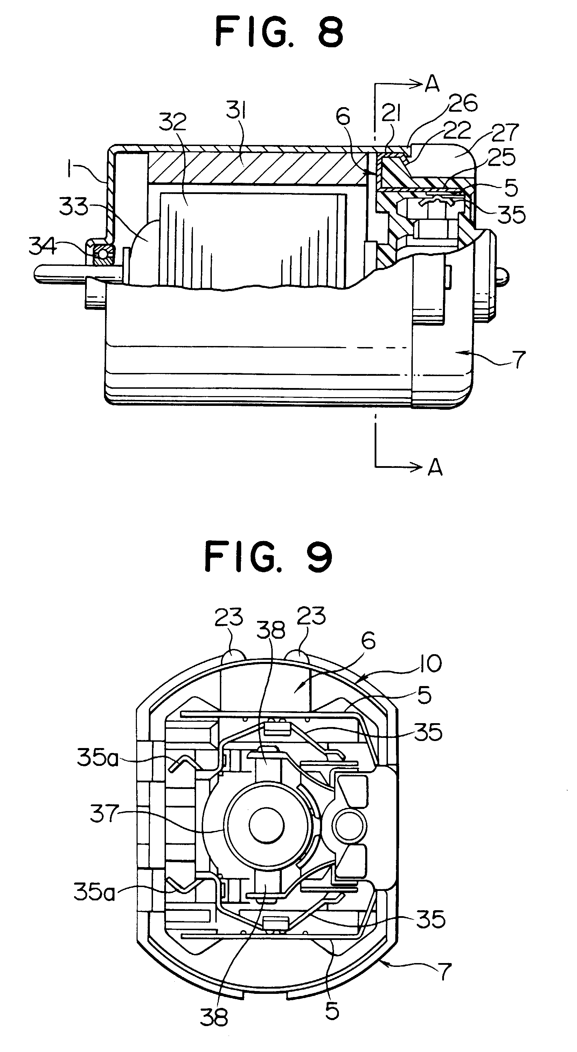

In the embodiment of the invention shown in Figures 8 and 9, like parts are indicated by like numerals in Figures 2 to 7.

Inside the motor case 1 a permanent magnet 31, and a rotor formed by winding an armature wire 33 around an iron core 32 is rotatably supported by bearings 34 inside the permanent magnet 31. The open end of the motor case 1 is fitted with a case cover 7 made of a resin material, and around a part of which an essentially U-shaped earth terminal 6 is fitted. A groove 27 for receiving both the deforming part 22 of the earth terminal 6 and a section 26 of the open end of the motor case 1 to be simultaneously plastically deformed is also provided on the engaging surface 10 of the case cover 7.

The electrically conductive part contacting leg 25 of the earth terminal 6 is disposed between the case cover 7 and the brush terminal piece 5, and the brush terminal piece 5 is pushed by the resiliency of the connecting terminal 35 to cause the electrically conductive part contacting piece 25 and the brush terminal piece 5 to make contact with each other and to be held in position. The respective distal ends of the connection terminals 35 form terminals 35a for feeding power to the commutator 37 via the brushes 38.

The leg 21 of the earth terminal 6 has a deforming part 22 and two case contacting springs 23, as does the terminal shown in Figures 4 and 5. As the open end of the motor case 1 is engaged with the case cover 7, the case contacting springs 23 are pressed, and the deforming part 22 is deformed, together with part of the open end of the motor case 1, into the groove 27 provided on the case cover 7. Thus, a stable contact pressure between the earth terminal 6 and the motor case 1 can be obtained.

As described above, this invention makes it possible to ensure stable electrical contact since a sufficient contact pressure can be obtained between the motor case and the earth terminal by disposing case contacting legs of the earth terminal on the engaging surfaces of the motor case and the case cover to engage the motor case with the case cover, and causing the tip of the respective leg of the earth terminal to be plastically deformed toward the case cover. Causing the tip of the earth terminal leg and part of the open end of the motor case to simultaneously plastically deform reduces assembly manhours and manufacturing cost. The benefits of eliminating spot welding will be self evident.

## Claims

1. A miniature electric motor having an electrically conductive motor case (1) with a permanent magnet (31) mounted therein; an electrically non-conductive case cover (7) engaging the case; a rotor (32) mounted for rotation within the case (1); and brushgear (36) on the case cover (7) for conducting electric power to the rotor (32) from an external power source, one of the brushes (38) being electrically connected to the motor case (1) by a U-shaped earth terminal (6), of which one leg (25) engages a connector (5) for a motor brush and the other leg (21) engages the motor case (1) between the case and the cover (7) CHARACTERISED IN THAT
a deforming part (22) of the other leg (21) of the earth terminal (6) is plastically deformed into a groove (27) formed in the cover (7) to secure the electrical connection to the case (1), and a section (26) of the motor case (1) is bent over the deforming part (22).

2. A miniature motor according to Claim 1 CHARACTERISED IN THAT the plastic deformation of the deforming part (22) of the other leg (21) of the earth terminal (6) is in two senses within the groove (27).

3. A miniature motor according to Claim 1 or Claim 2 CHARACTERISED IN THAT the length of the one leg (25) of the earth terminal (6) in the axial direction of the motor is longer than that of the other leg (21).

4. A miniature motor according to any preceding Claim CHARACTERISED IN THAT the other leg (21) of the earth terminal (6) is flanked by a case contacting spring (23) on either side thereof.

5. A miniature motor according to Claim 4 CHARACTERISED IN THAT the tips of the case contacting springs (23) are bent outwardly against the motor case (1).

6. A miniature motor according to Claim 4 or Claim 5 CHARACTERISED IN THAT the axial length of the other leg (21) of the earth terminal (6) is greater than that of either case contacting spring (23).

7. A miniature motor according to any preceding Claim CHARACTERISED IN THAT the tip of the one leg (25) is bent towards the connector (5) to enhance the electrical connection therewith.

## Patentansprüche

1. Ein elektrischer Kleinmotor, der ein elektrisch leitendes Motorgehäuse (1) aufweist, worin ein Permanentmagnet (31) montiert ist; einen elektrisch nicht leitenden Gehäusedeckel (7), der in das Gehäuse eingreift; einen Rotor (32), der in dem Gehäuse (1) rotiert; und Bürstenvorrichtungen (36) an dem Gehäusedeckel (7), zur Leitung des elektrischen Stromes von einer externen Spannungsquelle auf den Rotor (32), wobei eine der Bürsten (38) durch eine U-förmige Erdklemme (6) elektrisch mit dem Motorgehäuse (1) verbunden ist, deren eines Glied (25) in ein Verbindungsteil (5) zu einer Motorbürste eingreift und deren anderes Glied (21) an das Motorgehäuse (1) zwischen dem Gehäuse und dem Deckel (7) eingreift,
**dadurch gekennzeichnet**,
daß ein Verformungsstück (22) des anderen Gliedes (21) der Erdklemme (6) in eine Nut (27), die in dem Deckel (7) ausgebildet ist , plastisch verformt eingebracht ist, um die elektrische Verbindung zu dem Gehäuse (1) sicherzustellen, und daß ein Teilbereich (26) des Motorgehäuses (1) über das Verformungsstück (22) gebogen ist.

2. Ein Kleinmotor nach Anspruch 1,
**dadurch gekennzeichnet**,
daß die plastische Verformung des Verformungsstückes (22) des anderen Gliedes (21) der Erdklemme (6) in zwei Richtungen innerhalb der Nut (27) ausgeführt ist.

3. Ein Kleinmotor nach Anspruch 1 oder Anspruch 2,
**dadurch gekennzeichnet**,
daß die Länge des einen Gliedes (25) der Erdklemme (6) in axialer Richtung des Motors größer ist, als jene des anderen Gliedes (21).

4. Ein Kleinmotor nach einem der vorhergehenden Ansprüche,
**dadurch gekennzeichnet**,
daß das andere Glied (21) der Erdklemme (6) durch eine das Gehäuse berührende Feder (23) auf jeder seiner Seiten flankiert ist.

5. Ein Kleinmotor nach Anspruch 4,
**dadurch gekennzeichnet**,
daß die Spitzen der das Gehäuse berührenden Federn (23) nach außen gegen das Motorgehäuse (1) gebogen sind.

6. Ein Kleinmotor nach Anspruch 4 oder Anspruch 5,
**dadurch gekennzeichnet**,
daß die axiale Länge des anderen Gliedes (21) der Erdklemme (6) größer ist als die Länge jeder das Gehäuse berührenden Federn (23).

7. Ein Kleinmotor nach einem der vorhergehenden Ansprüche,
**dadurch gekennzeichnet**,
daß die Spitze des einen Gliedes (25) zu dem Verbindungsteil (5) hin gebogen ist, um die elektrische Verbindung mit demselben zu verstärken.

## Revendications

1. Moteur électrique miniature comportant un carter de moteur électroconducteur (1) avec un aimant permanent (31) monté dans celui-ci ; un couvercle de carter électriquement non-conducteur (7) s'emboîtant sur le carter ; un rotor (32) monté en rotation à l'intérieur du carter (1) ; et un balai conducteur (36) sur le couvercle du carter (7) destiné à conduire la puissance électrique au rotor (32) à partir d'une source de puissance électrique extérieure, l'un des balais conducteurs (38) étant raccordé électriquement au carter de moteur (1) par une borne de terre en forme de U (6) dont une branche (25) coopère avec un connecteur (5) pour le balai conducteur de moteur et l'autre branche (21) coopère avec le carter de moteur (1) entre le carter et le couvercle (7)
CARACTERISE EN CE QUE
une partie déformante (22) de l'autre branche (21) de la borne de terre (6) est déformée plastiquement dans une gorge (27), formée dans le couvercle (7), pour assurer le raccordement électrique au carter (1) et une section (26) du carter du moteur est recourbée sur la partie déformante (22).

2. Moteur miniature selon la revendication 1 CARACTERISE EN CE QUE la déformation plastique de la partie déformante (22) de l'autre branche (21) de la borne de terre (6) est à deux sens à l'intérieur de la gorge (27).

3. Moteur miniature selon la revendication 1 ou la revendication 2 CARACTERISE EN CE QUE la longueur d'une branche (25) de la borne de terre (6) dans la direction axiale du moteur est plus longue que l'autre branche (21).

4. Moteur miniature selon l'une quelconque des revendications précédentes, CARACTERISE EN CE QUE l'autre branche (21) de la borne de terre (6) comporte un ressort de contact de carter (23) sur chacun de ses côtés.

5. Moteur miniature selon la revendication 4, CARACTERISE EN CE QUE les pointes des ressorts de contact de carter (23) sont recourbées vers l'extérieur contre le carter de moteur (1).

6. Moteur miniature selon la revendication 4 ou la revendication 5, CARACTERISE EN CE QUE la longueur axiale de l'autre branche (21) de la borne de terre (6) est plus longue que le ressort de contact de carter (23).

7. Moteur miniature selon l'une quelconque des revendications précédentes, CARACTERISE EN CE QUE la pointe d'une branche (25) est recourbée vers le connecteur (5) pour améliorer la connexion électrique avec celui-ci.
